Europäisches Patentamt

European Patent Office

Office européen des brevets

(11) Veröffentlichungsnummer : **0 060 331**
**B1**

(12) **EUROPÄISCHE PATENTSCHRIFT**

(45) Veröffentlichungstag der Patentschrift :
20.02.85

(51) Int. Cl.⁴ : **H 02 H   7/20, H 02 H   7/08**

(21) Anmeldenummer : **81109044.8**

(22) Anmeldetag : **27.10.81**

(54) **Kurzschlussschutzvorrichtung für einen Gleichstromsteller.**

(30) Priorität : **12.03.81 DE 3109482**

(43) Veröffentlichungstag der Anmeldung :
**22.09.82 Patentblatt 82/38**

(45) Bekanntmachung des Hinweises auf die Patenterteilung : **20.02.85 Patentblatt 85/08**

(84) Benannte Vertragsstaaten :
**AT CH DE FR GB IT LI**

(56) Entgegenhaltungen :
**DE-A- 1 488 957**
**DE-B- 1 613 743**
**GB-A- 1 476 141**
**US-A- 3 260 912**

(73) Patentinhaber : **Siemens Aktiengesellschaft**
**Berlin und München Wittelsbacherplatz 2**
**D-8000 München 2 (DE)**

(72) Erfinder : **Brajder, Antonio, Dipl.-Ing.**
**Am Europakanal 4**
**D-8520 Erlangen (DE)**

**Beschreibung**

Die Erfindung bezieht sich auf eine Kurzschlußschutzvorrichtung für einen Laststrom steuernden Gleichstromsteller mit mehreren Transistoren, die mit Taktimpulsen angesteuert werden, die durch Vergleich einer Dreieckspannung mit einer Steuerspannung gewonnen werden, wobei eine gesonderte Überstromschutzvorrichtung vorgesehen ist, die bei Überstrom den jeweils zugeordneten Transistor sperrt.

Bei im Handel erhältlichen Geräten wird der Laststrom des Gleichstromstellers mit einer im Lastkreis angeordneten Stromerfassungseinrichtung überwacht und der Gleichstromsteller stromlos gemacht, sobald der Laststrom einen vorgegebenen Maximalwert überschreitet. Damit ist jedoch nicht in allen Fällen ein Kurzschlußschutz erreicht, da nicht jeder Kurzschlußstrom über die im Lastkreis angeordnete Stromerfassungseinrichtung fließt. Bei Gleichstromstellern in Brückenschaltung werden beispielsweise die durch Kurzschluß in einem Brückenzweig entstehenden Ströme nicht erfaßt. Außerdem können Erdschlüsse nicht zuverlässig erkannt werden. Die unmittelbare Abschaltung nach einem Überstrom hat zur Folge, daß bereits nach einem einmal auftretenden Überstrom der Gleichstromsteller endgültig außer Betrieb gesetzt wird. Die Anlage wird damit störempfindlich.

Eine Überstromschutzvorrichtung für einzelne Transistoren ist aus der Literaturstelle ETZ-B Bd. 30 (1978), Heft 26, Seite 1065 bekannt. Dabei wird der zu schützende Transistor auf Überstrom überwacht. Tritt eine Entsättigung auf, so wird der Transistor ausgeschaltet. Ein neu auftretender Einschaltimpuls wird über einen Kondensator auf den Transistor gekoppelt und schaltet diesen wieder ein.

Eine Vorrichtung der eingangs genannten Art ist aus der GB-A-1 476 141 bekannt. Dabei ist jedoch eine Kopplung von stromerfassenden Elementen für jeden Transistor mit einer Kontrolleinrichtung erforderlich, was bei stark unterschiedlichen Potentialen der Transistoren Maßnahmen zu einer galvanischen Trennung erfordert.

Aufgabe der Erfindung ist es daher, ohne großen Aufwand an Bauelementen eine Kurzschlußschutzvorrichtung der eingangs genannten Art so auszubilden, daß Kurzschlüsse sicher erfaßt werden und daß die Abschaltung des Gleichstromstellers erst erfolgt, wenn ein Kurzschluß über längere Zeit besteht. Unter Kurzschlüssen sollen dabei im folgenden auch diejenigen Erdschlüsse verstanden werden, die in den Transistoren des Gleichstromstellers zu Überströmen führen.

Diese Aufgabe wird erfindungsgemäß dadurch gelöst, daß jede Sperrung durch die Überstromschutzvorrichtung jeweils bis zum Beginn eines neuen Taktimpulses erfolgt, daß die Steuerspannung von einem Regler erzeugbar ist, an dessen Eingängen der Laststrom als Istwert und ein Strom-Sollwert anstehen, und daß der Wert der Steuerspannung im Kurzschlußfall den Maximalwert der Dreieckspannung nach einer vorgegebenen Verzugszeit übersteigt.

Bei der erfindungsgemäßen Vorrichtung wird jeder Kurzschluß und diejenigen Erdschlüsse, die zu einem Überstrom führen, erfaßt. Bei einem Kurzschluß wird der betroffene Transistor sehr schnell ausgeschaltet und bleibt ausgeschaltet, solange der Einschaltimpuls ansteht. Mit dem folgenden Einschaltimpuls wird er jedoch wieder eingeschaltet, so daß überprüft wird, ob noch ein Kurzschluß vorliegt. Eine endgültige Abschaltung des Gleichstromstellers erfolgt erst, wenn nach mehreren Einschaltimpulsen immer noch ein Kurzschluß vorliegt. Damit wird die Kurzschlußschutzvorrichtung gegen kurzzeitige Störungen im Lastkreis und im Stromerfassungskreis, die einen Kurzschluß vortäuschen können, unempfindlich.

Vorteilhafterweise sind Sollwert und Istwert des Laststroms des Gleichstromstellers einer Vergleichsstufe zugeführt, deren Ausgang mit einer Störmeldeeinrichtung verbunden ist. Da nach Ansprechen der Kurzschlußschutzvorrichtung der Istwert des Laststroms auf Null geht, der Sollwert dagegen in seiner ursprünglichen Größe erhalten bleibt, spricht die Vergleichsstufe an und meldet das Auftreten eines Kurzschlusses. Dabei ist keine Rückmeldung von den einzelnen Überstromschutzvorrichtungen erforderlich.

Vorteilhafterweise kann der Ausgang der Vergleichsstufe über ein Verzögerungsglied mit einer Abschaltvorrichtung für den Gleichstromsteller verbunden sein. Die Vergleichsstufe spricht einige Zeit nach dem Auftreten des Kurzschlusses an, wenn nämlich eine erhebliche Abweichung zwischen Sollwert und Istwert des Laststroms aufgetreten ist. Der Gleichstromsteller wird dann durch die Abschaltvorrichtung völlig spannungslos gemacht. Der jedem einzelnen Transistor zugeordneten Kurzschlußschutzvorrichtung ist damit die Abschaltvorrichtung überlagert.

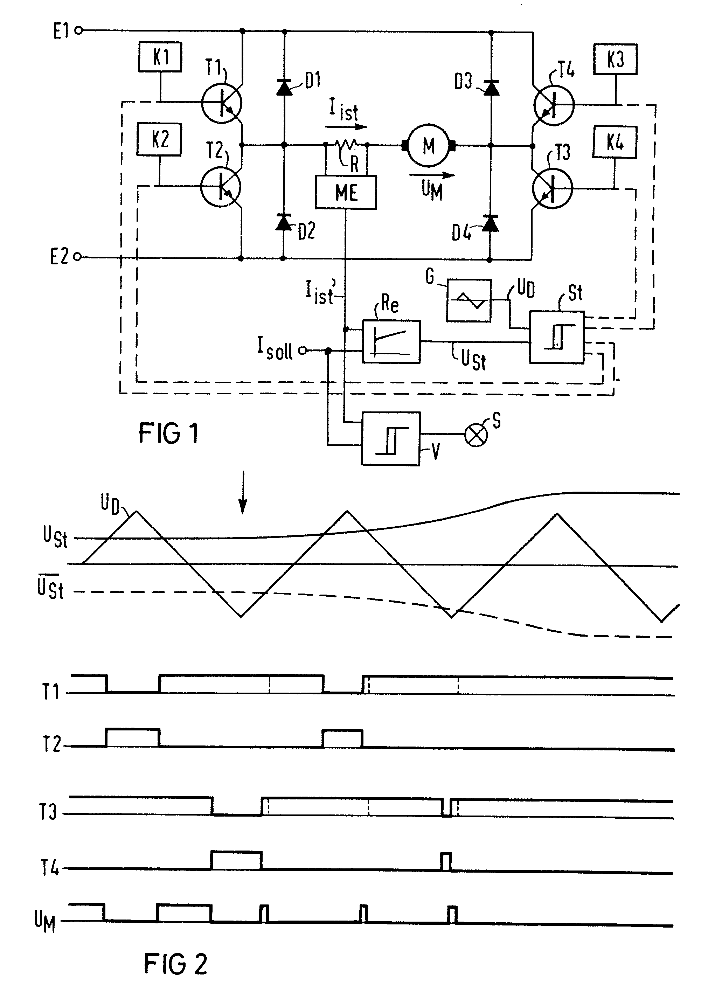

Im folgenden wird anhand der Figuren 1 und 2 ein Ausführungsbeispiel der Erfindung näher erläutert.

Fig. 1 zeigt das schematische Schaltbild eines Gleichstromstellers mit einer erfindungsgemäßen Kurzschlußschutzvorrichtung. Dabei sind zwischen zwei Eingangsklemmen E1, E2 vier Transistoren T1 bis T4 in Brückenschaltung angeordnet. Jeder Transistor T1 bis T4 ist mit je einer Freilaufdiode D1 bis D4 überbrückt. In der Brückendiagonalen ist ein Motor M als Last angeordnet.

Mit einem in Serie zum Motor M liegenden Widerstand R wird der Istwert des Laststroms $I_{ist}$ erfaßt und in einer Meßeinrichtung ME in einen dem Iststrom $I_{ist}$ proportionalen Meßwert $I_{ist'}$ umgeformt. Dieser Meßwert wird zusammen mit einem Wert für den Sollstrom $I_{soll}$ einem Regler

Re zugeführt, der aus der Regelabweichung eine Steuerspannung $U_{St}$ bildet. In einer Steuereinheit St wird die Steuerspannung $U_{St}$ mit einer von einem Dreieckgenerator G gelieferten Dreieckspannung $U_D$ verglichen. In Abhängigkeit davon, ob der Momentanwert der Dreieckspannung $U_D$ größer oder kleiner als die Steuerspannung $U_{St}$ ist, werden mit dem Steuergerät St in noch zu erläuternder Weise Steuerimpulse für die Transistoren T1 bis T4 abgeleitet.

Im linken Teil der Fig. 2 sind die Diagramme für die Steuerspannung $U_{St}$, die Dreieckspannung $U_D$, die Ansteuerimpulse der Transistoren T1 bis T4 und für die am Motor M anstehende Spannung $U_M$ im ungestörten Betrieb dargestellt. Die symmetrisch zur Nullinie liegende Dreieckspannung $U_D$ wird mit der Steuerspannung $U_{St}$ und mit der inversen Steuerspannung $\bar{U}_{St}$ verglichen.

Im dargestellten Ausführungsbeispiel wird der Transistor T1 eingeschaltet, solange die Dreieckspannung $U_D$ kleiner als die Steuerspannung $U_{St}$ ist, der Transistor T2 wird eingeschaltet, solange die Dreieckspannung $U_D$ größer als die Steuerspannung $U_{St}$ ist, der Transistor T3 wird eingeschaltet, solange die Dreieckspannung $U_D$ größer als die inverse Steuerspannung $\bar{U}_{St}$ ist und der Transistor T4 wird eingeschaltet, solange die Dreieckspannung $U_D$ kleiner als die inverse Steuerspannung $\bar{U}_{St}$ ist. Am Motor M steht eine positive Spannung $U_M$ an, wenn die Transistoren T1 und T3 gemeinsam eingeschaltet sind. Der Effektivwert der Motorspannung $U_M$ kann mit der Steuerspannung $U_{St}$ beeinflußt werden und erreicht seinen Maximalwert, wenn der Betrag der Steuerspannung $U_{St}$ gleich dem Maximalwert der Dreieckspannung $U_D$ wird. In diesem Fall sind die Transistoren T1 und T3 ständig eingeschaltet.

Um den Gleichstromsteller vor Kurzschlüssen und Erdschlüssen zu schützen, ist jeder der vier Transistoren T1 bis T4 mit einer eigenen, in Fig. 1 schematisch angedeuteten Überstromschutzvorrichtung K1 bis K4 versehen. Jede der Überstromschutzvorrichtungen K1 bis K4 schaltet den ihr zugeordneten Transistor T1 bis T4 schnell ab, wenn an diesem ein Überstrom auftritt. Jede Überstromschutzvorrichtung K1 bis K4 sperrt den zugeordneten Transistor T1 bis T4 solange, bis ein neuer Einschaltimpuls eintrifft. Ein einmal durch die Überstromschutzvorrichtung K1 bis K4 ausgeschalteter Transistor T1 bis T4 kann daher während des Einschaltimpulses, in dessen Verlauf ein Überstrom aufgetreten ist, nicht mehr eingeschaltet werden. Wenn aber der Einschaltimpuls, in dessen Verlauf der Überstrom aufgetreten ist, verschwindet, und ein neuer Einschaltimpuls auftritt, so wird der betreffende Transistor T1 bis T4 erneut eingeschaltet. Falls der Kurzschluß noch weiter besteht, erfolgt wiederum eine Abschaltung durch die Überstromschutzvorrichtung K1 bis K4.

Eine Kurzschlußschutzvorrichtung, die das beschriebene Verhalten zeigt, ist beispielsweise in der bereits eingangs erwähnten Literaturstelle ETZ-B, Bd. 30 (1978), Heft 26, Seite 1065 dargestellt. Dabei wird der zu schützende Transistor auf Entsättigung überwacht. Tritt eine Entsättigung auf, so wird der Transistor abgeschaltet. Ein neu auftretender Ansteuerimpuls wird über einen Kondensator auf den Transistor gekoppelt und schaltet diesen wieder ein. Selbstverständlich können auch andere Kurzschlußschutzvorrichtungen eingesetzt werden, sofern sie das beschriebene Verhalten zeigen. Eine derartige Kurzschlußschutzvorrichtung kann auch eine Selbsthaltung für die Dauer eines Einschaltimpulses aufweisen, die nach Verschwinden des Einschaltimpulses wieder aufgehoben wird.

Bei der beschriebenen Anordnung wird also jeder Transistor T1 bis T4 durch jeden neu auftretenden Einschaltimpuls wieder eingeschaltet und — sofern der Kurzschluß noch vorhanden ist — nach kurzer Zeit wieder ausgeschaltet. Eine derartige Belastung ist für die Transistoren T1 bis T4 jedoch nur für eine begrenzte Anzahl von Einschaltungen zulässig. Unter Berücksichtigung der Belastung der Transistoren einerseits und der Störunempfindlichkeit andererseits, sollen die Transistoren endgültig abgeschaltet bleiben, wenn der Kurzschluß nach zwei bis drei Einschaltimpulsen noch ansteht.

Dies wird erreicht, indem man die Steuerspannung $U_{St}$ nicht — wie dies bisher üblich war — auf Werte unterhalb des Maximalwerts der Dreieckspannung begrenzt, sondern auch einen Anstieg der Steuerspannung über den Maximalwert der Dreieckspannung $U_D$ zuläßt. Dann schaltet sich der Gleichstromsteller bei einem Kurzschluß nach einigen Einschaltimpulsen selbsttätig aus. Dies wird im folgenden anhand des Impulsdiagramms nach Fig. 2 erläutert. Wenn nach einem Kurzschluß, dessen Beginn in Fig. 2 mit einem Pfeil gekennzeichnet ist, die jeweiligen Transistoren T1 bis T4 durch die zugeordnete Überstromschutzvorrichtung vor Ende des Einschaltimpulses abgeschaltet werden, so erhält man Spannungsimpulse $U_M$, deren Zeitdauer gegenüber den Normalimpulsen stark verkürzt ist. Damit klingt auch der Iststrom $I_{ist}$ durch den Motor ab, so daß sich eine zunehmende Abweichung zwischen Iststrom $I_{ist}$ und Sollstrom $I_{soll}$ ergibt. Der Regler Re versucht dies auszugleichen, indem die Steuerspannung $U_{St}$ erhöht wird, wie dies in Fig. 2 dargestellt ist. Wenn der Betrag der Steuerspannung $U_{St}$ über den Maximalwert der Dreieckspannung steigt, so steht an den Transistoren T1 bis T3 ständig ein Einschaltimpuls an, während die Transistoren T2 und T4 keinen Einschaltimpuls mehr erhalten. Die Transistoren T1 und T3 werden nach kurzer Zeit durch die ihnen zugeordnete Überstromschutzvorrichtung K1 und K3 ausgeschaltet und im folgenden nicht mehr eingeschaltet, da kein neuer Einschaltimpuls mehr auftritt bzw. der anstehende Einschaltimpuls erhalten bleibt.

Mit der beschriebenen Schaltungsanordnung wird also erreicht, daß nach einem Kurzschluß die Ansteuerung der Transistoren T1 bis T4 zunächst noch für einige Perioden, im dargestellten Beispiel für drei Perioden aufrecht erhalten wird, bevor der Gleichstromsteller völlig außer Betrieb geht. Damit wird verhindert, daß bereits eine kurzzeitige Störung zur Betriebsunterbrechung führt. Dieses für den Betrieb vorteilhafte Verhalten wird ohne großen Aufwand an Bauelementen erreicht. Insbesondere ist keine Rückmeldung von den gesonderten Kurzschlußschutzvorrichtungen K1 bis K4, die alle auf unterschiedlichen Potentialen liegen, notwendig, so daß aufwendige Maßnahmen zur Potentialtrennung entfallen. Mit der Anstiegsgeschwindigkeit der Steuerspannung $U_{St}$, die von der Induktivität des Motors und von der Integrierzeit des Reglers Re abhängt, kann festgelegt werden, nach wie vielen Einschaltimpulsen die Transistoren T1 bis T4 endgültig abschalten. Ein Gleichstromsteller, der nach einem mehrere Perioden dauernden Kurzschluß außer Betrieb gegangen ist, kann beispielsweise durch Zurückstellen des Sollwerts wieder in Betrieb gesetzt werden.

Die Schaltungsanordnung nach Fig. 1 enthält außerdem eine Vergleichsstufe, der das Meßsignal $I_{ist}$ und der Sollstrom $I_{soll}$ zugeführt werden. Die Vergleichsstufe V gibt Signale ab, wenn die Abweichung zwischen Sollstrom $I_{soll}$ und dem Meßwert des Iststroms $I_{ist}'$ außerhalb einer bestimmten Toleranzbreite liegt. Dieses Signal wird einer Störmeldeeinrichtung S zugeführt. Da ein Ansprechen der Kurzschlußschutzvorrichtung stets zu einer erheblichen Abweichung zwischen Iststrom $I_{ist}$ und Sollstrom $I_{soll}$ führt, wird der Kurzschlußfall durch diese einfache Überwachungseinrichtung ohne Rückmeldung von den gesonderten Kurzschlußschutzvorrichtungen K1 bis K4 zuverlässig angezeigt. Das Ausgangssignal der Vergleichsstufe V kann auch einer in Fig. 1 nicht dargestellten Abschaltvorrichtung zugeführt werden, die im Kurzschlußfall den Gleichstromsteller von der Versorgungsspannung trennt.

## Ansprüche

1. Kurzschlußschutzvorrichtung für einen einen Laststrom steuernden Gleichstromsteller mit mehreren Transistoren (T1 bis T4), die mit Taktimpulsen angesteuert werden, die durch Vergleich einer Dreickspannung ($U_D$) mit einer Steuerspannung ($U_{St}$) gewonnen werden, wobei eine gesonderte Überstromschutzvorrichtung (K1 bis K4) vorgesehen ist, die bei Überstrom den jeweils zugeordneten Transistor (T1 bis T4) sperrt, dadurch gekennzeichnet, daß jede Sperrung durch die Überstromschutzvorrichtung (K1 bis K4) jeweils bis zum Beginn eines neuen Taktimpulses erfolgt, daß die Steuerspannung ($U_{St}$) von einem Regler (Re) erzeugbar ist, an dessen Eingängen der Laststrom ($I_{soll}$) als Istwert und ein Strom-Sollwert ($I_{soll}$) anstehen, und daß der Wert der Steuerspannung ($U_{St}$) im Kurzschlußfall den Maximalwert der Dreieckspannung ($U_D$) nach einer vorgegebenen Verzugszeit übersteigt.

2. Kurzschlußschutzvorrichtung nach Anspruch 1, dadurch gekennzeichnet, daß Sollwert ($I_{soll}$) und Istwert ($I_{ist}$) des Laststroms des Gleichstromstellers einer Vergleichsstufe (V) zugeführt sind, deren Ausgang mit einer Störmeldeeinrichtung (S) verbunden ist.

3. Kurzschlußschutzvorrichtung nach Anspruch 2, dadurch gekennzeichnet, daß der Ausgang der Vergleichsstufe (V) über ein Verzögerungsglied mit einer Abschaltvorrichtung für den Gleichstromsteller verbunden ist.

## Claims

1. Short-circuit protection arrangement, for a direct current regulating unit controlling a load current, having several transistors (T1 to T4) which are triggered by switching pulses derived by comparing a triangular voltage ($U_D$) with a control voltage ($U_{St}$), wherein a separate excess current protection device (K1 to K4) is provided which switches off its respectively associated transistor (T1 to T4) when excess current occurs, characterised in that each switch-off by the excess current protection device (K1 to K4) concerned is effective until a fresh switching pulse commences, in that for producing the control voltage ($U_{St}$) there is provided a regulator (Re) having applied at its inputs the load current ($I_{actual}$), as an actual value, and a desired current value ($I_{desired}$), and in that in the event of a short-circuit the value of the control voltage ($U_{St}$) rises above the maximum value of the triangular voltage ($U_D$) after a predetermined delay time.

2. Short-circuit protection arrangement according to claim 1, characterized in that the desired value ($I_{desired}$) and the actual value ($I_{actual}$) of the load current of the regulating unit are applied to a comparison stage (V), the output of which is connected to a disturbance indicating device (S.)

3. Short-circuit protection arrangement according to claim 2, characterized in that the output of the comparison stage (V) is connected by way of a delay element to a circuit-breaking device for the direct current regulating unit.

## Revendications

1. Dispositif de protection contre les courts-circuits pour un régulateur de courant continu commandant un courant de charge, comportant plusieurs transistors (T1, T4) qui sont commandés par des impulsions de cadence qui sont obtenues par comparaison d'une tension en triangle ($U_D$) et d'une tension de commande ($U_{St}$) et dans lequel il est prévu un dispositif particulier de protection contre les surintensités (K1 à K4), qui, dans le cas d'une surintensité, bloque le transistor (T1 à T4) respectivement associé, caractérisé par le fait que chaque blocage effectué par le dispositif de protection contre les surintensités (K1 à K4) est réalisé jusqu'au début d'une nouvelle impulsion de cadence, que la tension de commande ($U_{St}$) peut être produite par un régulateur ($R_e$), aux entrées duquel sont appliquées le courant de charge ($I_{ist}$) en tant que valeur réelle, et une valeur de consigne du courant ($I_{soll}$), et que la valeur de la tension de commande ($U_{st}$) dépasse, dans le cas d'un court-circuit, la valeur maximale de la tension triangulaire ($U_D$) au bout d'un temps de retard prédéterminé.

2. Dispositif de protection contre les courts-circuits suivant la revendication 1, caractérisé par le fait que la valeur de consigne ($I_{soll}$) et la valeur réelle ($I_{ist}$) du courant de charge du régulateur de courant continu sont envoyés à un étage comparateur (V) dont la sortie est reliée à un dispositif (S) de signalisation de perturbation.

3. Dispositif de protection contre les courts-circuits suivant la revendication 2, caractérisé par le fait que la sortie du comparateur (V) est reliée par l'intermédiaire d'une ligne à retard comportant un dispositif de débranchement pour le régulateur de courant continu.

FIG 1

FIG 2